# EUROPEAN PATENT APPLICATION

(11) **EP 2 226 728 A1**
(43) Date of publication of application: **08.09.2010**
(21) Application number: 08868651.4
(22) Date of filing: 22.12.2008
(51) Int. Cl.: G06F 13/00

(54) **COMMUNICATION DEVICE, COMMUNICATION SYSTEM, COMMUNICATION METHOD, AND PROGRAM**

(30) Priority: 28.12.2007 JP 2007340440
(71) Applicant: Sony Corporation, Tokyo 108-0075 (JP)
(72) Inventor: FUJINAGA, Hiroyuki, Tokyo 108-0075 (JP)
(74) Representative: Nicholls, Michael John
(86) International application number: PCT/JP2008/073322
(87) International publication number: WO 2009/084506

(57) **Abstract**

[Object] Object of the present invention is to provide a communication device capable of reliably ensuring the compatibility of the communication when a higher level application includes one or a plurality of protocols.

[Solving Means] A communication device including a physical layer 108 for performing transmission and reception of signals with another communication counterpart by wireless communication, and a protocol conversion unit (PCL) 102 for connecting a higher level user application 100 and the physical layer 108, where the protocol conversion unit 102 includes a PCL Common 102a, commonly arranged in respective devices which can communicate with each other, for performing a basic process for protocol conversion, and a conversion processing unit, arranged in correspondence to one or a plurality of protocols of the user application 102, for converting the protocol selected from the one or the plurality of protocols by the PCL Common 102a to a protocol for communicating at the physical layer 108.

## Description

### Technical Field

The present invention relates to a communication device, a communication system, a communication method, and a program.

### Background Art

As described for example in the following patent literature 1, a mobile communication system which intends to make it possible to transmit information of a mobile object to a general portable terminal which a user of a mobile object owns is known in the past.

Patent Literature 1: JP 2005-191819 (A)

### Disclosure of Invention

### Technical Problem

Recently, it is assumed that the communication device is equipped with a plurality of higher level applications. In such device, it is assumed that there are a plurality of protocols of the higher level applications.

However, if a plurality of protocols of the higher level applications exist, it becomes a problem with which protocol communication is to be realized, and in some applications to be used, a situation is assumed in which the compatibility in connection with a communication counterpart is lost. In this case, even if multi-function with a plurality of applications is realized on the communication device side, the compatibility of the communication with other devices may not be achieved, which results in restriction in the system.

Thus, the present invention is made in view of the above-mentioned problem, and the object of the present invention is to provide a new and improved communication device, a communication system, a communication method, and a program capable of reliably ensuring the compatibility of the communication when a higher level application includes one or a plurality of protocols.

### Technical Solution

To solve the problem mentioned above, according to an aspect of the present invention, there is provided a communication device including a physical layer for performing transmission and reception of signals with another communication counterpart, and a protocol conversion unit for connecting a higher level application and the physical layer, where the protocol conversion unit includes, a common processing unit, commonly arranged in respective devices which can communicate with each other, for performing a basic process for protocol conversion, and a conversion processing unit, arranged in correspondence to one or a plurality of protocols of the higher level application, for converting a protocol selected from the one or the plurality of protocols by the common processing unit to a protocol for communicating at the physical layer.

According to the above configuration, transmission and reception of signals with another communication counterpart are performed by the physical layer, and a higher level application and the physical layer are connected by the protocol conversion unit. The common processing unit of the protocol conversion unit is commonly arranged in respective devices which can communicate with each other, and a basic process for protocol conversion is carried out by the common processing unit. The conversion processing unit of the protocol conversion unit is arranged in correspondence to one or a plurality of protocols of the higher level application. And the protocol selected from the one or the plurality of protocols by the common processing unit is converted to a protocol for communicating at the physical layer by the conversion processing unit. Accordingly, because a protocol is selected from the one or the plurality of protocols by the common processing unit commonly arranged in respective devices which can communicate with each other, it becomes possible to select a protocol suited for communication, and to ensure the compatibility of the communication.

Further, the common processing unit may perform basic operation including start and stop of at least the protocol conversion. According to such configuration, the basic operations including start and stop of the protocol conversion can be realized by the common processing unit commonly arranged in respective devices which can communicate with each other.

Further, the common processing unit may select a protocol that matches a protocol of the higher level applications provided in the communication counterpart from the one or the plurality of protocols according to a result of negotiation with the communication counterpart. According to such configuration, the compatibility with the communication counterpart can be ensured, and the communication with the communication counterpart can be reliably performed because a protocol that matches the protocol of the higher level applications provided in the communication counterpart is selected from the one or the plurality of protocols according to the result of the negotiation with the communication counterpart.

Further, the common processing unit may not perform connection with the communication counterpart if a protocol that matches the protocol of the higher level applications provided in the communication counterpart does not exist among the one or the plurality of protocols. According to such configuration, if a protocol that matches the protocol of the higher level applications of the communication counterpart does not exist in the one or the plurality of protocols, unnecessary processes can be suppressed from being performed since the connection with the communication counterpart is not performed.

Further, the common processing unit may have a version check function of determining whether or not a version of software of the protocol conversion unit matches a version of software of the protocol conversion unit provided in the communication counterpart according to a result of the negotiation with the communication counterpart. According to such configuration, the compatibility with the communication counterpart can be ensured and the communication with the communication counterpart can be reliably performed since whether or not the version of the software of the protocol conversion unit matches the version of the software of the protocol conversion unit provided in the communication counterpart is determined according to the result of the negotiation with the communication counterpart.

Further, the common processing unit may not establish connection with the communication counterpart if the version of the software of the protocol conversion unit does not match the version of the software of the protocol conversion unit of the communication counterpart. According to such configuration, if the version of the software of the protocol conversion unit does not match the version of the software of the protocol conversion unit provided in the communication counterpart, unnecessary processes can be suppressed from being performed since the connection with the communication counterpart is not established.

Further, the physical layer may communicate data to which a profile ID is attached, representing the type of data with respect to the data whose protocol is converted in the conversion processing unit, with the communication counterpart. According to such configuration, a plurality of logical channels can be realized on one physical layer.

Further, to solve the problem mentioned above, according to the another aspect of the present invention, there is provided a communication system in which communication devices communicate with each other, where the communication device includes a physical layer for performing transmission and reception of signals between communication devices which are communication counterparts; and a protocol conversion unit for connecting a higher level application and the physical layer, and where the protocol conversion unit includes a common processing unit, commonly arranged in respective communication devices which can communicate with each other, for performing a basic process for protocol conversion, and a conversion processing unit, arranged in correspondence to one or a plurality of protocols of the higher level application, for converting a protocol selected from the one or the plurality of protocols by the common processing unit to a protocol for communicating at the physical layer.

According to the above configuration, in the communication system in which the communication devices perform communication with each other, transmission and reception of signals is performed by the physical layer between communication devices that are communication counterparts, and the higher level application and the physical layer are connected by the protocol conversion unit. The common processing unit of the protocol conversion unit is commonly arranged in respective devices which can communicate with each other, and a basic process for protocol conversion is carried out by the common processing unit. The conversion processing unit of the protocol conversion unit is arranged in correspondence to one or a plurality of protocols of the higher level application. The protocol selected from the one or the plurality of protocols by the common processing unit is converted to a protocol for communicating at the physical layer by the conversion processing unit. Accordingly, because a protocol is selected from the one or the plurality of protocols by the common processing unit commonly arranged in respective devices which can communicate with each other, it becomes to possible to select a protocol suited for communication, and to ensure the compatibility of the communication.

Further, to solve the problem mentioned above, according to another aspect of the present invention, there is provided a communication method for communication devices to perform communication with each other, the method including the steps of exchanging protocol information by the communication device with another communication device which is a communication counterpart, selecting a protocol that matches a protocol of a higher level application provided in the communication counterpart from one or a plurality of protocols of the higher level applications based on the protocol information; and converting the selected protocol to a protocol for communicating with the communication counterpart.

According to the above configuration, in the communication method for communication devices to perform communication with each other, protocol information is exchanged with another communication device that is the communication counterpart, a protocol that matches the protocol of the higher level applications provided in the communication counterpart is selected from one or a plurality of protocols of the higher level application based on the protocol information, and the selected protocol is converted to a protocol for communicating with the communication counterpart. Therefore, it becomes possible to select a protocol suited for communication based on the protocol information exchanged with the communication counterpart, and to ensure the compatibility of the communication.

Further, to solve the problem mentioned above, according to the another aspect of the present invention, there is provided a program for causing a computer to function as means for exchanging protocol information with another communication device which is a communication counterpart; selecting a protocol that matches a protocol of a higher level application provided in the communication counterpart from one or a plurality of protocols of the higher level application based on the protocol information; and converting the selected protocol to a protocol for communicating with the communication counterpart.

According to the above configuration, protocol information is exchanged with another communication device that is the communication counterpart, a protocol that matches the protocol of the higher level application provided in the communication counterpart is selected from one or a plurality of protocols of the higher level applications based on the protocol information, and the selected protocol is converted to a protocol for communicating with the communication counterpart. Therefore, it becomes possible to select a protocol suited for communication based on the protocol information exchanged with the communication counterpart, and to ensure the compatibility of the communication.

### Advantageous Effects

According to the present invention, it becomes possible to reliably ensure the compatibility of the communication when a higher level application includes one or a plurality of protocols.

### Brief Description of Drawings

[FIG. 1] FIG 1 is a schematic view showing two devices constituting a wireless communication system of the present embodiment;
[FIG 2] FIG 2 is a schematic view showing a configuration of each device of an initiator and a responder as a hierarchical structure;
[FIG 3] FIG 3 is a schematic view showing data flow in the initiator and the responder;
[FIG 4] FIG 4 is a schematic view showing the configuration in FIG 2 with the OSI reference model;
[FIG 5] FIG. 5 is a schematic view showing data flow of transmission and reception of file and data in each layer in the device;
[FIG. 6] FIG 6 is a schematic view showing logical channels with CSDUs;
[FIG 7] FIG 7 is a schematic view showing the situation in which a CSDU is mapped;
[FIG. 8] FIG 8 is a schematic view showing a hardware configuration of the devices;
[FIG. 9] FIG 9 is a schematic view showing access points of services provided by each layer and a relationship between layers;
[FIG 10] FIG. 10 is a schematic view showing a state transition in the system of the present embodiment;
[FIG. 11] FIG. 11 is a schematic view showing a process of negotiation;
[FIG 12] FIG. 12 is a schematic view for describing the PCL version information;
[FIG. 13] FIG 13 is a schematic view showing a sequence of emulation selection;
[FIG. 14] FIG 14 is a schematic view showing the service of the PCL Emulation;
[FIG. 15] FIG 15 is a schematic view showing the service of the PCL Emulation.

### Explanation of Reference

- 100: User application
- 102: PCL
- 102a: PCL Common
- 102b: PCL Emulation
- 108: Physical layer
- 210: CPU

### Best Mode for Carrying out the Invention

Hereinafter, preferred embodiments of the present invention will be described in detail with reference to the appended drawings. Note that, in this specification and the drawings, elements that have substantially the same function and structure are denoted with the same reference signs, and repeated explanation is omitted.

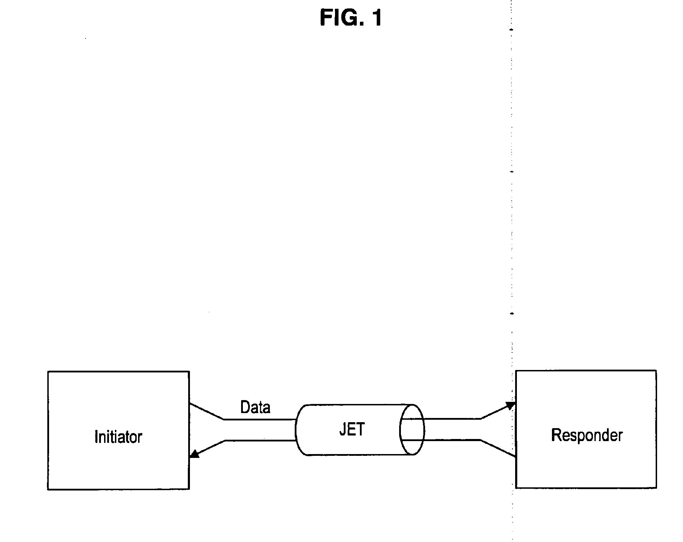

A wireless communication system of the present embodiment is a communication method that aims to transmit and receive data between a pair of devices, and performs wireless transmission and reception of data between devices, which are quite near. FIG. 1 is a schematic view showing two devices (communication devices) constituting a wireless communication system of the present embodiment. The two devices have the role of a responder and an initiator, respectively. The initiator is the "side making a connection request" and the responder is the "side receiving a connection request", and in the present embodiment, a one-to-one (P2P) communication is performed. In establishing connection, the initiator makes a connection request while the responder is in a standby state, but only the roles of the two sides in establishing connection are different and the configurations of devices related to the connection are the same. As an Initiator is, for example, a portable device, an electronic card or the like and as a responder is a device such as a personal computer, a portable device, an electronic card or the like.

In FIG 1, a situation in which wireless communication is performed via physical layers provided in each device of the present embodiment is schematically shown. In the present embodiment, a layer referred to as the JET physical layer is illustrated as the physical layer, though it is not limited thereto, and can be applied to a general-purpose physical layer for communication. The JET physical layer is particularly suited for the communication of large-capacity data such as pictures, moving images, and the like by using a profile ID, CSDUs, and the like. Further, in this specification, both of the devices, the initiator and the responder, are sometimes collectively referred to as the JET device (or simply, a JET).

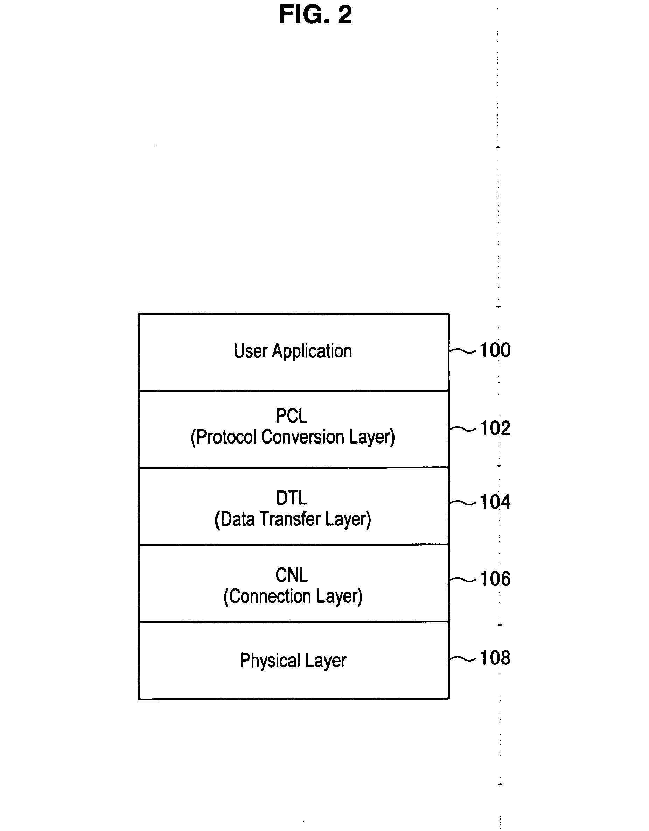

FIG 2 is a schematic view showing a configuration of each device of the initiator and the responder as a hierarchical structure in the wireless communication system according to the present embodiment. As shown in FIG 2, in the present embodiment, a user application 100, a PCL (Protocol Conversion Layer) 102, a DTL (Data transfer Layer) 104, CNL (Connection Layer) 106, and a physical layer 108 are arranged in order from the upper layer.

The user application 100 corresponds to a higher level protocol (e.g., USB, TCP/IP, OBEX, etc.) for performing data communication using the service provided by the software of the upper layer of the physical layer 108, or an application (e.g., OS such as Windows (registered trademark), Linux, etc.) for operating devices including the JET such as UI (User Interface) and the like, in the device equipped with the physical layer 108 capable of performing short-range wireless communication according to present embodiment. In the JET device, the higher level protocol or the user application is not particularly defined, and it can be freely set by the user (manufacturing company) configuring the devices. Therefore, each device may include a plurality of higher level protocols or the user application 100.

The PCL 102 (protocol conversion unit) supports the protocol conversion function for mutually converting any protocol (USB, OBEX, etc.) used by the user configuring the devices, to a JET-specific protocol. Thereby, it is possible to support various protocols by providing a plurality of types of protocols to the physical layer (PHY Layer) 108 of the JET. Besides, even in the same USB, the protocol conversion sometimes may be different depending on the difference in OS such as Windows (registered trademark) and Linux. The PCL 102 performs processes to convert content data such as audios and videos generated by the user application 100 which is higher, other protocol data, commands and the like to a data format that can be handled by the CNL 104 which is lower. Furthermore, the PCL 102 performs processes necessary for the communication of the JFT such as connection, disconnection, device authentication, operation mode setting, and initialization.

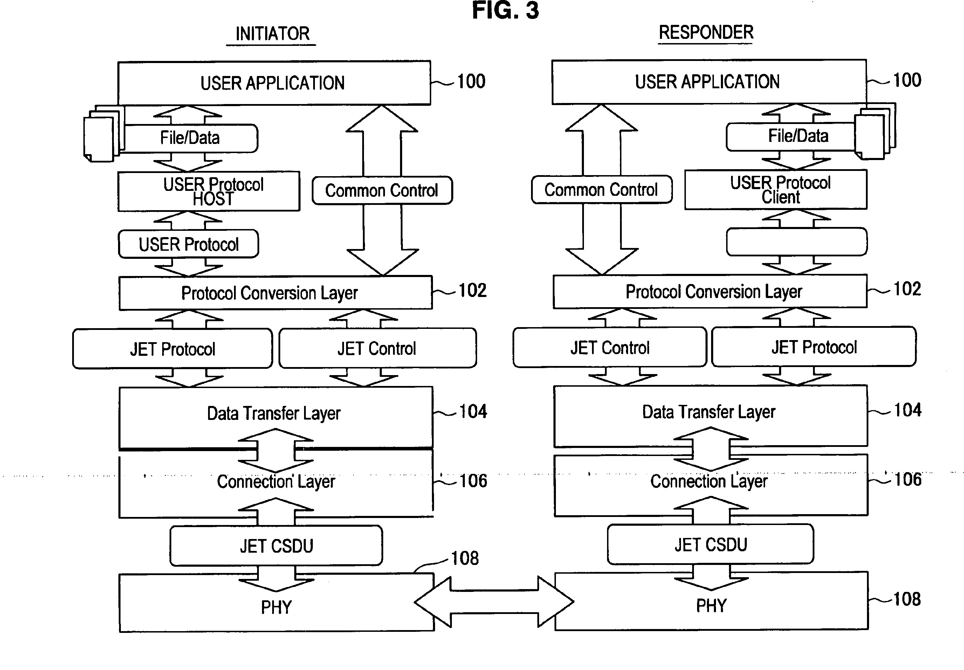

FIG. 3 is a schematic view showing data flow in the initiator and the responder. As shown in FIG 3, the user application 100 performs two types of control, the connection by the JET and the data transfer. As the JET, it provides services necessary to realize these functions and performs conversion to the JET-specific protocol and connection management. Further, it also performs transfer to the DTL 104, which generates a CSDU (CNL service data unit) conforming with the JET standard, and CNL 106.

The DTL 104 fits the data received from the PCL 102 which is higher into a predetermined packet structure, and performs transmission between the initiator and the responder using services provided by CNL 106 which is lower. Further, in reception, the DTL 104 analyzes the data received from the CNL 106, extracts CSDUs, and delivers the payload thereof to the PCL 102 which is higher. A CSDU includes status information, which is usable in the user application 100, for communication other than that by the physical layer (PHY Layer) 108, and the DTL 104 also performs generation process thereof, error notification, and the like.

DTL 104 can, regardless of the type of the higher level protocol, fit the data input from higher level into DTL packets and pass to the CNL 106 which is lower, extract DTL packets from the data from lower level and transfer DTL packet payloads to higher level. The DTL 104 itself can receive the data transmitted from different protocols from the PCL 102. However, because it is necessary to tear down the session in transmission and reception of data of different protocols in the JET, use of the DTL service with a plurality of protocols is not performed.

Due to such limitation, even if input of data is made from a plurality of PCL Emulations, which will be hereafter described, to the DTL 104, the DTL 104 does not perform Mux on such data. Furthermore, even if the data received from CNL 106 includes a plurality of protocols, processes such as analysis of the protocols, distribution to the PCL 102 according to the respective protocol content, or tearing down of a session due to error detection are not performed.

For this reason, on the PCL 102 side using the service by the DTL 104, it is needed to use the service by the DTL 104 under the condition where one type of protocol to be used always is fixed. Determination for fixing the protocol method, and performing necessary transmission and reception are the roles of the PCL Common, which will be hereinafter described, and generation of protocol data and parse are performed by the PCL Emulation. An exclusion process in order for the DTL service not to be simultaneously used by a plurality of protocols is also the role of the PCL Common.

The DTL 104 provides the service necessary for the PCL Common to establish the connection, and the service necessary for the PCL Emulation to perform transmission and reception of data after the connection establishment.

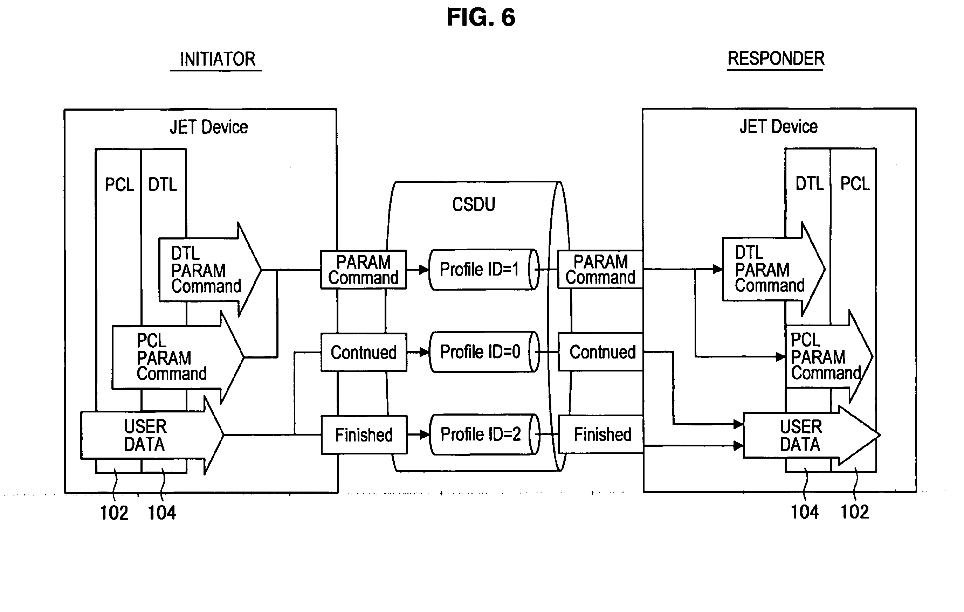

Further, the DTL 104 receives a Profile ID indicating whether the currently executed service is the intermediate data of the entire transfer size, the last data, or is a parameter and not data, and size from the PCL 102 as parameters, and inserts them into a CSDU packet header which is generated using the CNL service of lower level. The DTL 104 realizes a plurality of logic channels (Channels) as in FIG. 6 on one physical layer (PHY Layer) 108, by embedding transmission parameters in a part of a CSDU packet generated when the JET transmits data.

DTL 104 has a function for generating CSDU packets, which are defined in the JET standard. In the DTL 104, parameters for identifying the type of the CSDU packets are attached to the CSDU packet header. Those which are attached thereto are a Profile ID, size, and data payload.

The DTL 104 performs data transfer in units of CSDU provided by the CNL 106. The DTL 104 gives the following three types of profile IDs (T_DATA, LT_DATA, CNL_DATA) to CSDUs at the time of CSDU transmission. Further, at the time of CSDU reception, the DTL 104 performs process according to the type of the profile ID.

### T_DATA, LT_DATA

The DTL 104 gives T_DATA to the CSDUs transferring user data. However, in division to the CSDU payload, if it is the last CSDU, the DTL 104 gives LT_DATA. Only user data is stored in the payload of the CSDU, and the DTL 104 does not embed header information and the like therein.

### CNL_DATA

The DTL 104 gives CNL_DATA to the CSDU transferring control data specific to the JET system. Examples of the control data are parameter information (specifically, TBD) and the like. The header information (specifically, TBD) is embedded in the CSDU payload. The DTL 104 analyzes the head information, and performs a appropriate process.

The CNL 106 performs communication using the service of the physical layer 108 in response to the request of the DTL 104 which is higher, as well as establishment of the connection of the physical layer 108, disconnection, ensuring of the continuity of data, and the like.

The physical layer 108 is the JET physical layer of the wireless communication system capable of performing the short-range large-capacity communication according to the present embodiment, and includes an error correcting function and a preamble sense function.

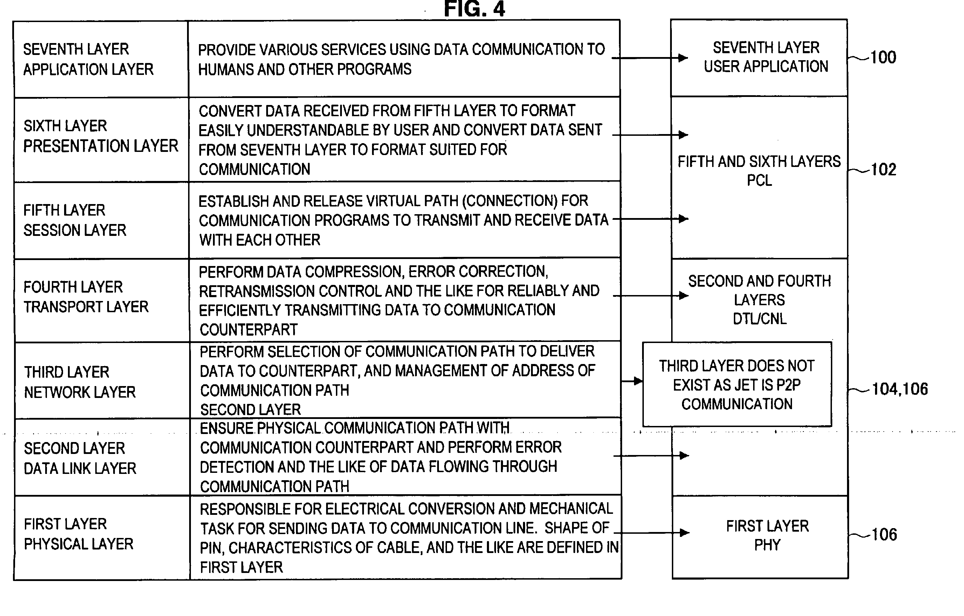

FIG 4 shows the configuration of FIG 2 with the OSI reference model based on the role of the software of the device equipped with the JET device. As shown in FIG 4, the physical layer (first layer) 108 is responsible for electrical conversion and mechanical operation for sending data to the communication line. The shape of a pin, characteristics of a cable, and the like are also defined in the first layer.

The DTL 104, CNL 106 correspond to the data link layer (second layer), the transport layer (fourth layer). The data link layer ensures a physical communication path with a communication counterpart, and performs error detection and the like of the data flowing through the communication path. Further, the transport layer performs data compression, error correction, retransmission control and the like for reliably and efficiently transmitting data to a communication counterpart. Because the system of the present embodiment is P2P communication, the network layer (third layer) in the OSI reference model is not provided, and the system can be simplified.

The PCL 102 corresponds to the session layer (fifth layer) and the presentation layer (sixth layer). The session layer performs establishment and release of a virtual path (connection) for the communication programs to perform transmission and reception of data with each other. The presentation layer performs processes such as converting the data received from the session layer to a format easily understandable to a user, and converting the data sent from the application layer to a format suited for communication.

The user application 100 corresponds to the application layer (seventh layer). The application layer provides various services using data communication to humans and other programs.

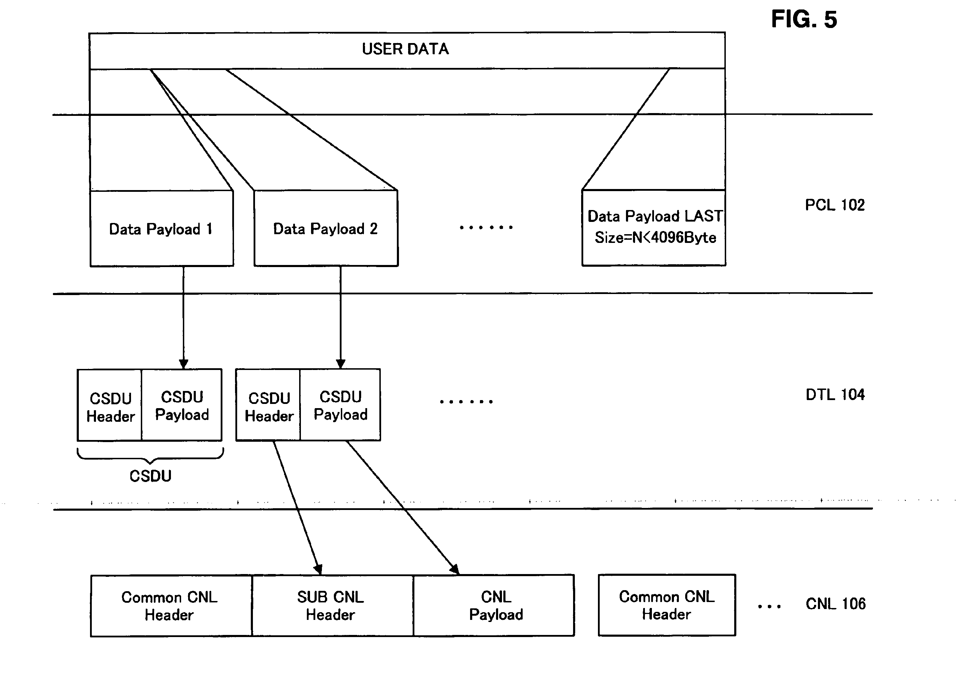

Next, data flow in the communication device of the present embodiment will now be described. FIG. 5 is a schematic view showing data flow, and shows the data flow in transmission and reception of file, data in each layer in the JET device. Besides, the functions of the PCL 102 are divided to the PCL Common and the PCL Emulation. Because the PCL Emulation is used in data transfer, the process by the PCL 102 shown in FIG 5 is a function realized by the PCL Emulation. The CSDU input to the physical layer 108 is defined as a data format, and the same is true for a data format handled by DTL 104 which performs generation, analysis of the head information thereof and the like.

Further, as hereinafter described, the PCL Common for providing a common function is defined, but the PCL Emulation depends on the system specification according to the respective protocols because it performs data conversion process complying with the user protocol.

In the JET communication, there exist transmission and reception of not only data such as files, but also management parameters in the PCL 102 and in the DTL 104 and data between the identical layers at the communication destination. These files and parameters are finally transmitted by the CNL 106 in a format complying with the CSDU format. FIG 6 is a schematic view showing logical channels with CSDUs. As shown in FIG 6, a Profile ID is used to specify the type of data. Thereby, it becomes possible to logically use a plurality of transmission channels at the level of the physical layer 108. Accordingly, it is possible to greatly improve the communication rate, and in particular, it is suitable for large-capacity data communication such as moving image and the like.

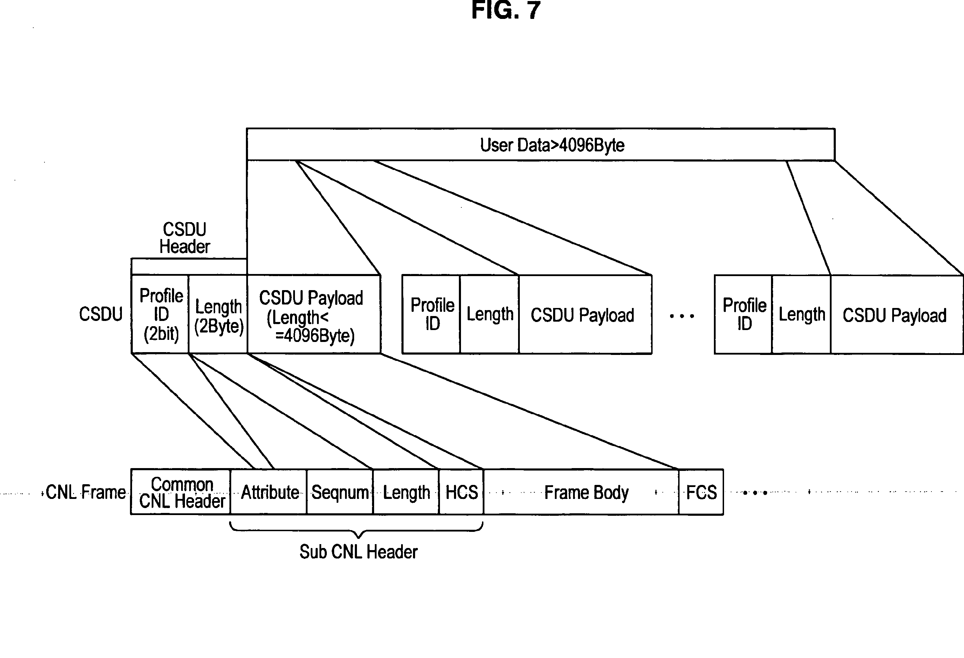

FIG 7 is a schematic view showing a situation in which a CSDU is mapped. The CSDU is a data unit exchanged between the CNL 106 and the DTL 104, and as shown in FIG 7, the CSDU is mapped on a CNL frame. The size of user data transmitted and received by the user application 100 is not particularly defined. If the length of data exceeds the data divided length (maximum of 4096 bytes), the PCL 102 divides the data into a plurality of CSDU payloads. The PCL 102 calls out the DTL service and performs transmission and reception of the user data in units of CSDU payloads. The DTL 104 adds a header to a CSDU payload and passes the same to the CNL 106 which is lower. The CSDU header consists of the Profile ID and the Length indicating the length of the CSDU payload.

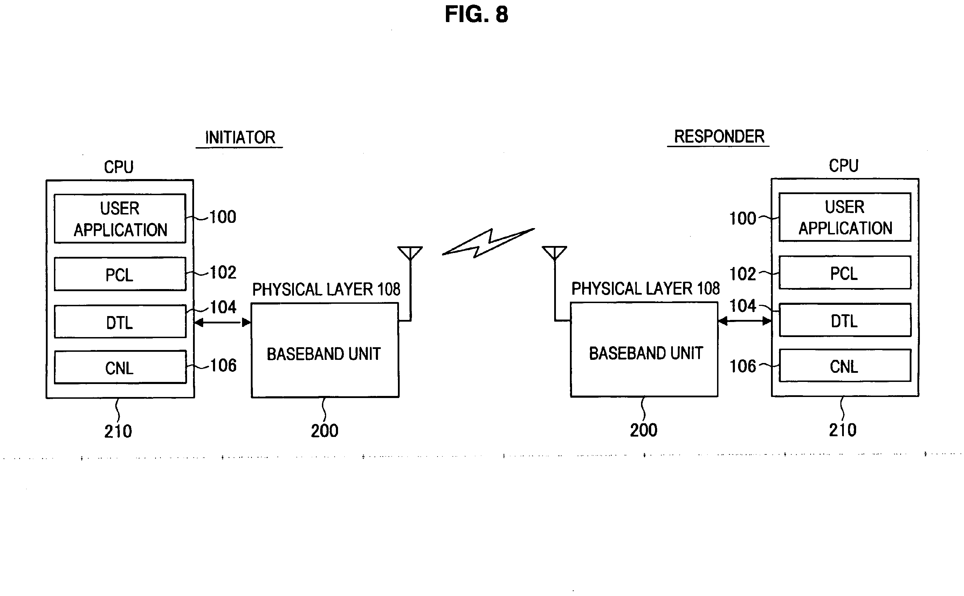

FIG 8 is a schematic view showing a hardware configuration of the devices of the present system. As shown in FIG 5, the initiator and the responder are respectively configured to have a chip 200 constituting the physical layer 108, and a CPU 210. The physical layer 108 includes a baseband unit. The user application 100, the PCL 102, and the DTL 104 and the CNL 106 as described above are realized by operating the CPU 210 with software (a program). The software is stored in a memory included in a communication device constituting the initiator, the responder, or in an external recording medium exterior to the communication device, or the like.

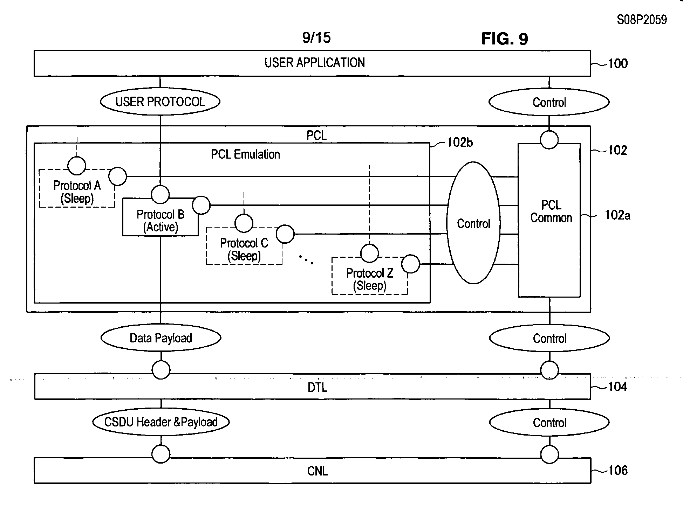

FIG 9 is a schematic view showing access points of services provided by each layer and a relationship between layers. The level which is higher than the PCL 102 is the user application 100. The PCL 102 is a layer that provides the service using the lower level CNL 104. Because the roles of the PCL 102 are distributed in such a manner that the PCL Common 102a (common processing unit) performs control to the user application 100 which is higher and the PCL Emulation 102b (conversion processing unit) performs data transfer, the service of the PCL 102 is defined respectively.

The service by the PCL Common 102a provides the following services by calling out services of connection/disconnection/other controls of the DTL 104 in response to the request of the user application 100.
Control service such as connection, disconnection and the like
Event notification service such as errors
Emulation control service

The service by the PCL Emulation 102b exists individually for each corresponding protocol. Each PCL Emulation is a protocol service which makes it possible to communicate commands and data of general-purpose protocol (USB, OBEX, etc.) in the payload of the CSDU.

In the PCL 102, only the service complying with the protocol method selected by the PCL Emulation service is allowed to be started. In the PCL Emulation service, the CSDU payload to use the service by the DTL 104 is generated according to the request of the higher level protocol. By having a plurality of the services by PCL emulation 102b, it becomes possible to realize a plurality of the emulation services in one JET device. It is managed by the PCL Common 102a so that only one type of the emulation service is used in one session.

As shown in FIG 9, the functions of the PCL 102 are divided to the PCL Common 102a and the PCL Emulation 102b. The PCL Common 102a provides basic functions such as initialization of service of the lower layer, connection, disconnection in response to the request of the user application 100 of which is higher. Because the processes of the basic functions are performed in the PCL Common 102a, the same processes are performed regardless of which protocol is selected. On the other hand, after the startup is completed by the PCL Common 102a, the PCL Emulation 102b converts any protocol of the user application 100 to a protocol format to be handled by the DTL 104, CNL 106, which are lower.

As described above, the PCL Common 102a provides common function services such as initialization and basic communication (connection, disconnection, and device authentication) to the user application 100. The PCL Common 102a is software commonly provided in all the JET devices. Therefore, the PCL 102 can not operate in the configuration having only the PCL Emulation 102b:

The PCL Emulation 102b performs user data transfer after connection is established by the PCL Common 102a, and has a role of mutually converting the user protocol (general-purpose protocol data such as USB and OBEX) to a data format handled by the DTL 104. The PCL Emulation 102b has a role of converting the user protocol data sent from the user application 100 to a format interpretable by the DTL 104 which is lower. The emulation block (a conversion module of PCL Emulation 102b) of the PCL 102 provides a service for providing the data transfer function in the same method as that of controlling the device such as existing USB, MSC, NFC and the like from the viewpoint of the user application 100. However, the PCL Emulation 102b exists for the number of protocols specific to the user configuring the device.

The DTL 104 provides as the DTL service the function using the service of the CNL 106, which is lower, to two types of the PCLs (PCL Common 102a, PCL Emulation 102b) which is higher. As hereinafter described in detail, the PCL Emulation 102b has a conversion module (Protocol A, Protocol B, Protocol C, ··· Protocol Z) for each user protocol, but only one type can be used in one session (connection), and the control thereof is performed by the PCL Common 102a. For example, if the higher level protocol is USB, a different conversion module is prepared according to whether it is the mass storage class or other methods.

In the JET device, the user configuring the device can freely set a conversion module in compliance with the protocol of higher level and can build the PCL Emulation 102b. Further, the conversion module also can be freely added or deleted by the user. On the other hand, because the PCL Common 102a is the basic function of protocol conversion, it is obliged to be common in all the JET devices.

In FIG. 9, Protocols A to Z are shown as the user protocol, where Protocol B is active, and a situation is shown in which the connection is established with the Protocol B. In this case, the connection with the Protocol B is established in both of the initiator and the responder. With which protocol the connection is to be established is determined by the negotiation between the initiator and the responder.

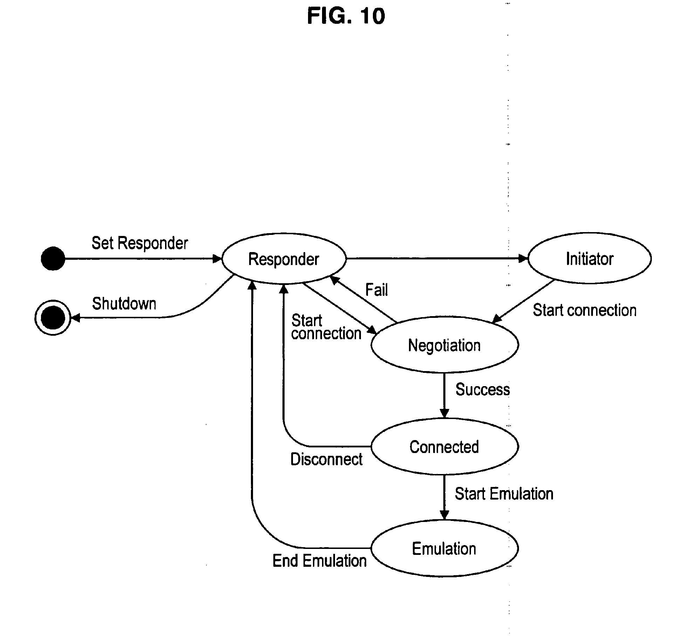

FIG 10 is a schematic view showing a state transition in a system of the present embodiment. The PCL 102 performs the state transition as shown in FIG 10 by using the change in connection condition of the initiator and the responder caused by the physical layer 108, or the PCL Service from the user application.

In FIG 10, first, the responder enters the connection standby state from the initiator, and the initiator enters a state where it searches for the responder of the connection destination. When the connection of the initiator and the responder starts (Start Connection), negotiation (Negotiation) is carried out between the initiator and the responder. In this state, between the JET devices, check of the version of software, check of the emulation method (what protocol each other has) is performed.

When the version and the emulation method match as a result of the negotiation, connection is established, and the connection by the physical layer 108 is completed (Connected). The emulation thereafter starts (Emulation), and data transfer becomes possible between the user applications 100. On the other hand, when the version information of the software do not match, or when the protocols, which the both sides possess, do not match and the emulation methods do not match, connection is not established (Disconnect). When connection is :not established (Disconnect), or when the emulation is terminated (End Emulation), the responder enters the connection standby state.

The PCL Common 102a has a negotiation function of performing the version check (Version Check) and the discrimination of the emulation method based on the version (Version) information of the PCL 102. If the version and the emulation method match as a result of the negotiation, connection by the same protocol is carried out between the initiator and the responder. The version management function (PCL Version Management) necessary for the negotiation and the emulation discrimination function (PCL Select Emulation) will be described later. The negotiation is not a service provided with respect to the user application 100, and is an internal function automatically executed in the connection standby state when connection is detected.

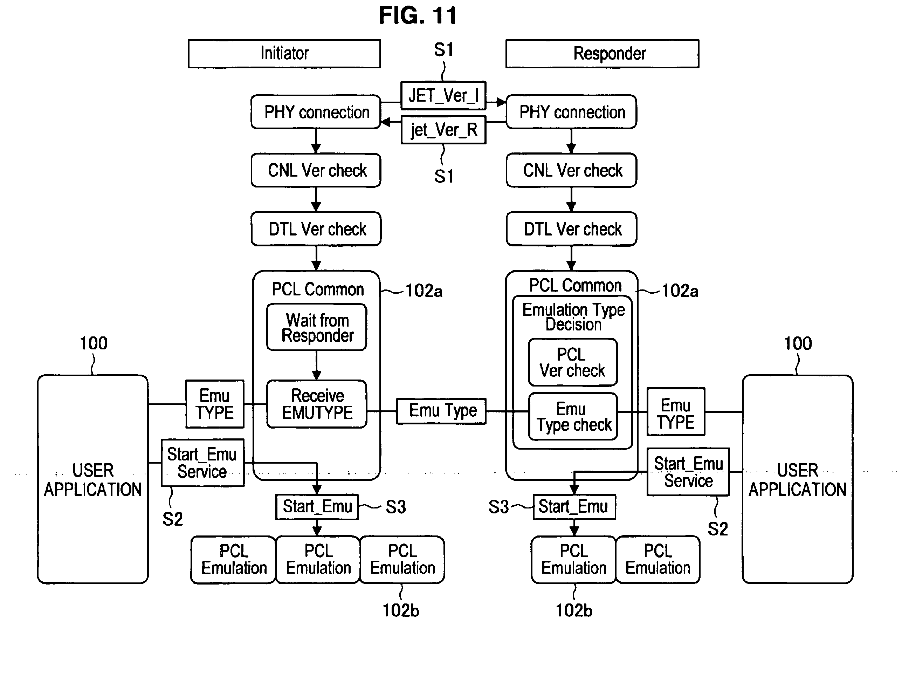

FIG 11 is a schematic view showing a process of negotiation. The process of FIG 11 can be implemented by operating the CPU 210 by the software of each layer of FIG. 2. By way of example, the responder performs the discrimination itself, and the initiator waits for the discrimination result. The CNL 106 acquires the version information of the connection destination, and the version information is automatically exchanged at the time of connection (step S1). The version information exchanged in this case is referred to as the JET version.

In the PCL 102, the JET version information of the connection destination JET device is already acquired at the time when the connection is detected according to the event from the lower level CNL 106 and the DTL 104. Thus, as shown in FIG 11, the version check of the software of the CNL 106 (CNL Ver check) and the version check of the software of the DTL (DTL Ver check) are first carried out. The discrimination of the emulation method by the check of the PCL version contained in the JET version is carried out in the PCL 102.

The discrimination of the emulation method is carried out, for example, at the initiative of the responder. The version information of the PCL 102 is exchanged between both sides of the initiator and the responder, and the version information of the software of the PCL 102 is checked by the PCL version check function of the PCL Common 102a (PCL Ver check).

Next, the information on the emulation type is exchanged between both sides of the initiator and the responder, and the type of emulation is checked by the emulation type check function of the PCL Common 102a (EMU Type check), as shown in FIG. 11. The emulation type is a parameter describing the emulation method (protocol) by which the respective JET devices can communicate.

On the responder side, comparison of the respective emulation type of the initiator and responder is performed, and determination is made as connectable if the same emulation type exists. The PCL 102 gives a notice to the user application 100 at the time when the emulation type is confirmed, and the user application 100 calls out the PCL_start_emu service (step S2). A command of Start_Emu is transmitted from the PCL Common 102a to the PCL Emulation 102b. The startup by the PCL Common 102a is thereby completed, and the emulation by the PCL Emulation 102b is started (step S3). Then, the protocol of the user application 100 is converted by the PCL Emulation 102b and it becomes possible to communicate with the DTL 104 and the CTL 106 which are lower.

Further, if the initiator and the responder have a plurality of the same emulation types, this is notified to the user application 100. When specifying one of the plurality of emulation types on the user application 100 side, the information thereon is sent to the PCL 102. In this case, one emulation type specified in advance can be specified on the user application 100 side. Further, the emulation type of an appropriate protocol corresponding to the communication speed can be selected if the necessity to use the protocol which makes possible high-speed communication is relatively low such as when one of the initiator or the responder is a portable telephone. Such specifications can be freely set by the user configuring the JET device or the user application 100.

The emulation selection by the PCL 102 will now be described. The emulation selection is a function executed inside the PCL Common 102a when performing the negotiation on the responder side that detected the connection detection from the initiator. Whether the emulation adapted to each other is provided is checked from the PCL version information in the JET version exchanged between the JET devices at the time of connection.

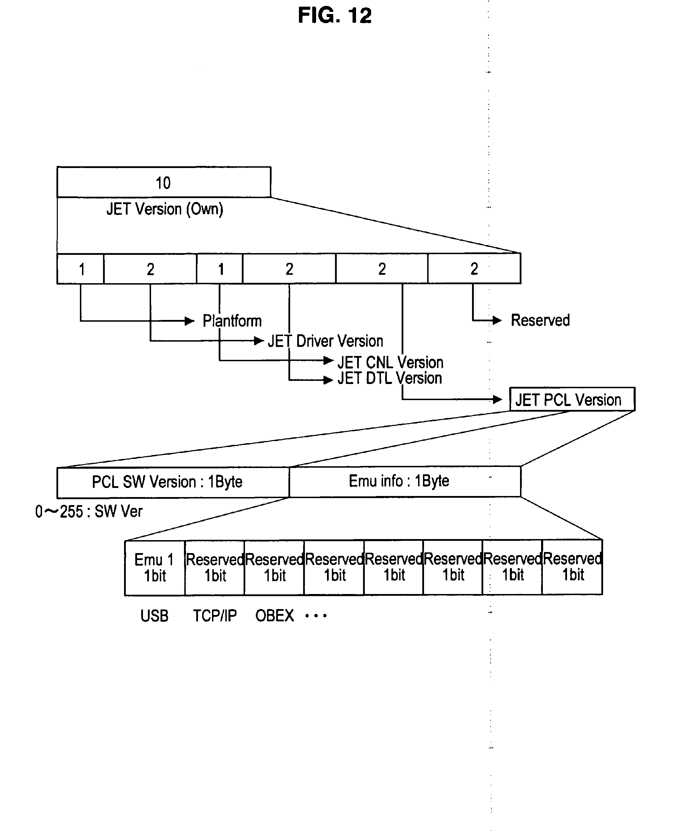

FIG 12 is a schematic view for describing the JET version information. The PCL 102 manages both of the version information of the own device and the version information of the connection destination JET device. The version information of the own device is always loaded at the time of startup, and the version information of the connection destination device is held at the time of connection detection and during connection.

As shown in FIG 12, the version information of the JET is a total of 10 bytes, and includes the platform information (1 byte), the JET driver version information (2 byte), the CNL version information (1 byte), the DTL version information (2 byte), the PCL version information (2 byte), and the reserved information (2 byte) in order from the upper layer.

The first one byte of the PCL version information (2 byte) is the Version No (T.B.D) of the software for maintaining the compatibility of the system. The last one byte indicates the emulation method which the device (JET device) supports. In FIG 12, USB, TCP/IP, OBEX ... are exemplified as the emulation methods, and data of one bit is provided to each method. And if the bit is 1, this indicates that the emulation method is supported, and if the bit is 0, this indicates that the emulation method is not supported. The maximum value of the emulation method to be supported by one JET device is not defined, but at least one emulation method is to be supported.

Beside, as shown in FIG. 11, check of the version information is performed sequentially from the information of the upper layer side (platform side) of FIG. 12. Check of the emulation type is performed after the check of the version information of the PCL 102.

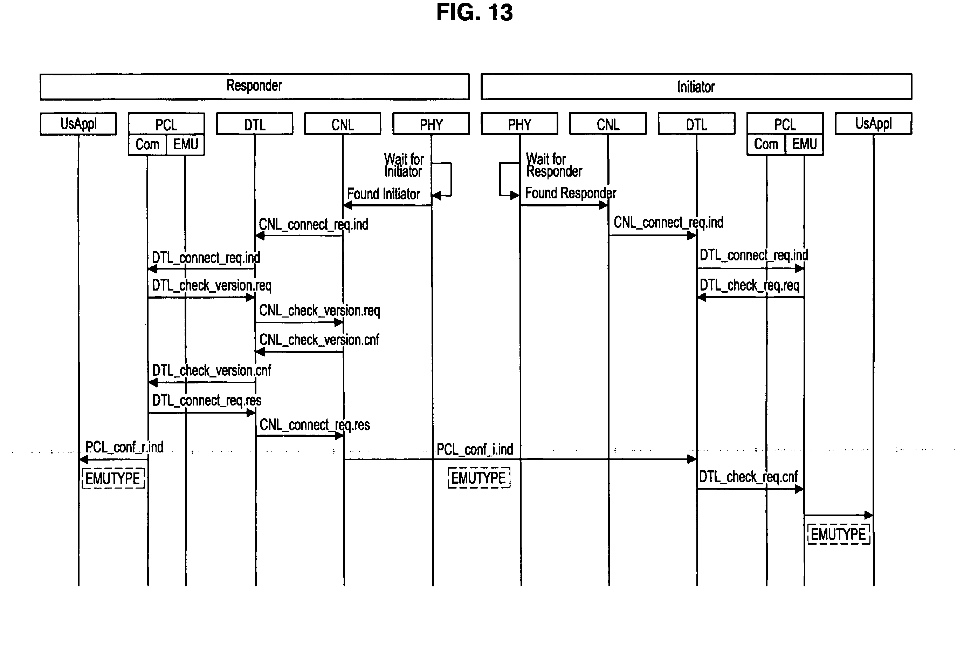

The emulation type describing the emulation method by which each other can communicate is selected as the result of execution of the connection, and the selected emulation type is notified to the user application 100 from the responder side, and notified to the initiator waiting for permission. FIG 13 is a schematic view showing a sequence of emulation selection. In FIG 13, the selected emulation type (EMUTYPE) is notified as PCL_conf_r.ind with respect to the user application 100 (UsrAppl) of the responder, and as PCL_conf_i.ind with respect to the initiator side (see FIG. 13).

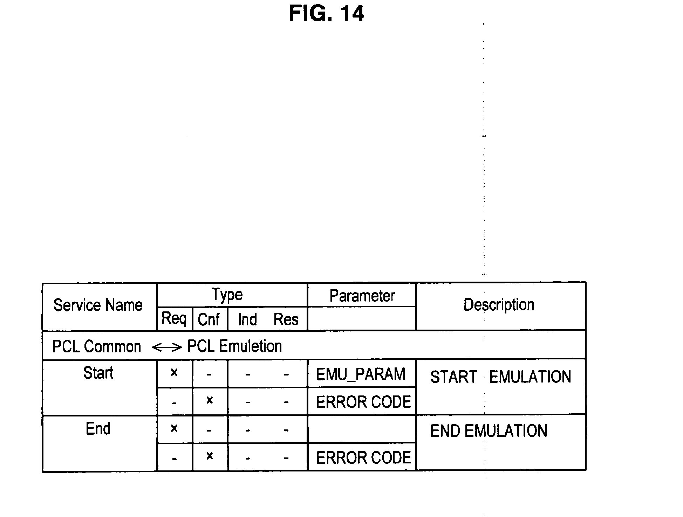

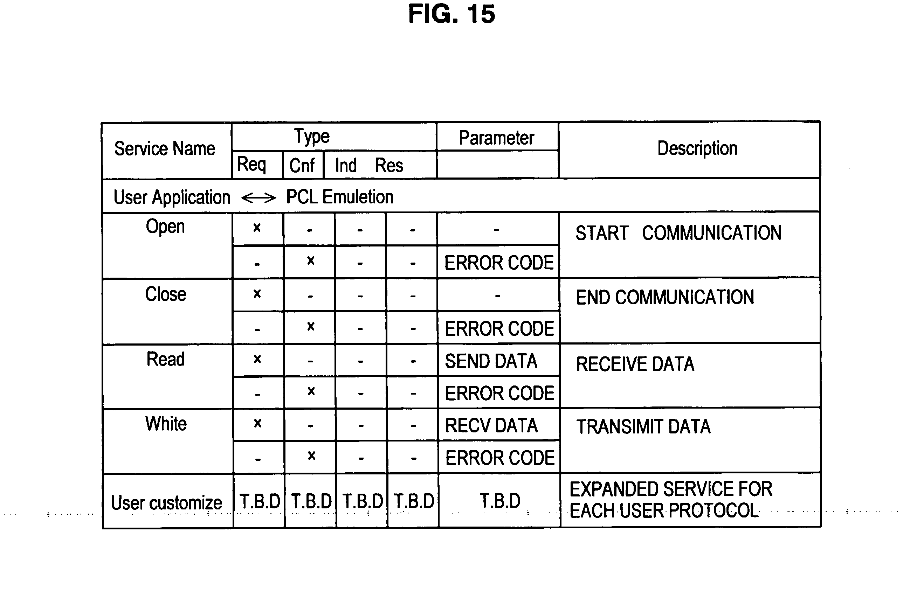

FIGs. 14 and 15 are schematic views showing the services related to the PCL Emulation 102b. Each service will be described hereafter. The start and end are performed by the PCL Common 102a, but transmission and reception of data can be executed by performing communication from the user application 100 to the PCL Emulation 102b. Therefore, the service is divided to the service provided with the PCL Common 102a (FIG. 14), and the service provided with the user application 100 (FIG 15).

### Start service (Mandatory: FIG 14)

The Start service is a service provided as a default, and is a service providing initialization processing of the PCL Emulation 102b to be executed by the PCL Common 102a when starting the emulation. At the time when the Start is completed, data transmission and reception using the user protocol become possible from the user application 100.

### End service (Mandatory: FIG 14)

The End service is a service provided as a default, and is a service providing end processing of the emulation to be executed by the PCL Common 102a when ending the emulation. At the time when the End is completed, data transmission and reception using the user protocol becomes impossible from the user application 100. The PCL Common 102a executes the service before executing disconnection (PCL_Disconnect) if the emulation is Started.

### Open service (Mandatory: FIG 15)

The Open service is a service providing the processes required at the time of opening the communication path on the user protocol.

### Close service (Mandatory: FIG 15)

The Close service is a service providing the processes required at the time of closing the communication path on the user protocol.

### Read service (Mandatory: FIG 15)

The Read service is a service providing processes required when acquiring data of the connection destination on the user protocol.

### Write service (Mandatory: FIG 15)

The Write service is a service providing processes required when transmitting data to the connection destination on the user protocol.

As described above, the Open service and the Close service are processes corresponding to the initialization process of the higher level protocol by the PCL Common 102a. The Read service and the Write service are processes related to transmission and reception of data by the user application 100.

### User customize service (Option: FIG 15)

This is a service which does not correspond to the above-described services, and is defined by the user configuring the device as an individual service. The portions other than "opening (Open)" and "closing (Close)" the communication path, and "transmitting (Write)" and "receiving (Read)" data are set as a customized region freely set by the user configuring the JET device, and can be freely set by the user according to the type of user application 100 (Windows (registered trademark), Linux, etc.). However, the "Start" and the "End" by the PCL Common 102a are necessary and are common in all JET devices regardless of which application is used.

According to the present embodiment as described above, the PCL 102 for converting the protocol of the user application 100 is arranged, and the protocol that matches the protocol of the communication counterpart is selected from one or a plurality of protocols of the user application 100 by the PCL Common 102a commonly arranged in each communication device. And because the selected protocol is converted to the protocol for performing communication at the physical layer 108, it becomes possible to select the protocol suitable for the communication according to the protocol of the user application 100 of the communication counterpart, and it is to possible to ensure the compatibility of the communication. Besides, in the above-described example, the wireless communication system has been described by way of example, but the communication system may be a wired communication system.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

## Claims

1. A communication device comprising:
a physical layer for performing transmission and reception of signals with another communication counterpart; and
a protocol conversion unit for connecting a higher level application and the physical layer,
wherein the protocol conversion unit includes,
a common processing unit, commonly arranged in respective devices which can communicate with each other, for performing a basic process for protocol conversion, and
a conversion processing unit, arranged in correspondence to one or a plurality of protocols of the higher level application, for converting a protocol selected from the one or the plurality of protocols by the common processing unit to a protocol for communicating at the physical layer.

2. The communication device according to claim 1, **characterized in that** the common processing unit performs basic operation including start and stop of at least the protocol conversion.

3. The communication device according to claim 1, **characterized in that** the common processing unit selects a protocol that matches a protocol of the higher level application provided in the communication counterpart from the one or the plurality of protocols according to a result of negotiation with the communication counterpart.

4. The communication device according to claim 3, **characterized in that** the common processing unit does not establish connection with the communication counterpart if the protocol that matches the protocol of the higher level application provided in the communication counterpart does not exist among the one or the plurality of protocols.

5. The communication device according to claim 1, **characterized in that** the common processing unit has a version check function of determining whether or not a version of software of the protocol conversion unit matches a version of software of the protocol conversion unit provided in the communication counterpart according to a result of negotiation with the communication counterpart.

6. The communication device according to claim 5, **characterized in that** the common processing unit does not establish connection with the communication counterpart if the version of the software of the protocol conversion unit does not match the version of the software of the protocol conversion unit provided in the communication counterpart.

7. The communication device according to claim 1, **characterized in that** the physical layer communicates data to which a profile ID is attached, representing a type of data with respect to the data whose protocol is converted in the conversion processing unit, with the communication counterpart.

8. A communication system in which communication devices communicate with each other,
wherein the communication device includes:
a physical layer for performing transmission and reception of signals between communication devices which are communication counterparts; and
a protocol conversion unit for connecting a higher level application and the physical layer, and
wherein the protocol conversion unit includes,
a common processing unit, commonly arranged in respective communication devices which can communicate with each other, for performing a basic process for protocol conversion, and
a conversion processing unit, arranged in correspondence to one or a plurality of protocols of the higher level application, for converting a protocol selected from the one or the plurality of protocols by the common processing unit to a protocol for communicating at the physical layer.

9. A communication method for communication devices to perform communication with each other, the method comprising the steps of:
exchanging protocol information by the communication device with another communication device which is a communication counterpart;
selecting a protocol that matches a protocol of higher level application provided in the communication counterpart from one or a plurality of protocols of the higher level applications based on the protocol information; and
converting the selected protocol to a protocol for communicating with the communication counterpart.

10. A program for causing a computer to function as means for:
exchanging protocol information with another communication device which is a communication counterpart;
selecting a protocol that matches a protocol of higher level application provided in the communication counterpart from one or a plurality of protocols of the higher level application based on the protocol information; and
converting the selected protocol to a protocol for communicating with the communication counterpart.
